Europäisches Patentamt

European Patent Office

Office européen des brevets

(11) Publication number: **0 058 265**
**A1**

## EUROPEAN PATENT APPLICATION

(21) Application number: **81300630.1**

(22) Date of filing: **17.02.81**

(51) Int. Cl.³: **A 01 D 85/00**

(43) Date of publication of application:
25.08.82 Bulletin 82/34

(84) Designated Contracting States:
AT BE DE FR IT NL SE

(71) Applicant: BROWNS AGRICULTURAL MACHINERY
COMPANY LIMITED
Albany Works Leighton Buzzard
Bedfordshire LU7 8SB(GB)

(72) Inventor: Brown, Arthur William Gray
Two Trees Heath Park Road
Leighton Buzzard Bedfordshire(GB)

(72) Inventor: Gill, Stephen
4 Marston Court
Long Marston Tring Hertfordshire(GB)

(74) Representative: Symes, Robert George et al,
FORRESTER & BOEHMERT Widenmayerstrasse 4/1
D-8000 München 22(DE)

(54) An improved bale collating apparatus.

(57) An improved bale collating apparatus comprising a bale accumulator adapted to accumulate bales of hay or stray in an array, the bale accumulator being adapted to be connected behind a baling machine and having entry means (16) for receiving bales from a baling machine and collating means (17, 18, 19) adapted to form an array of eight bales, the configuration of the array comprising four bales juxtaposed in side by side relationship, the ends of said four bales defining two substantially parallel edges along each of which a pair of further bales are arranged, the bales of each pair being arranged in mutual end to end relationship. The configuration of the array allows a stable stack of bales to be built, the stack being built from stacking the arrays on top of each other, each array being rotated through 90° relative to the array on which it is to be placed.

EP 0 058 265 A1

Title: An improved bale collating apparatus.

The present invention relates to an apparatus for collating an array of bales of straw or hay, the array having a configuration that enables a plurality of arrays to be stacked on top of each other in a stable manner.

Bale collators, hereinafter referred to as bale accumulators, are well known and such machines are in use arranged to be towed behind a baling machine and as the bales issue from the baling machine they are collated by the accumulator, each such array on or after completion, being released from the accumulator.

A common configuration of an array of bales so collated is known as a flat eight in which the bales are collated into four separate channels in the accumulator, there being two bales in each channel in end-to-end relationship to form the array of eight.

Examples of such accumulators are described in British Patent No. 1,378,991 and British Patent No. 1,101,667.

After completion of an array of the bales, it is convenient that all the bales may be picked up together and placed for example on a trailer for removal from the field. It is usual that a stack of arrays is formed and the whole stack is then removed. The stack may either be formed on a trailer or alternatively the stack may be formed in the field, the complete stack then being picked up by a lifting and carrying attachment provided on an agricultural tractor.

The stacking of the arrays of bales can cause problems because even though generally speaking the bale is twice as long as it is wide, therefore the array of 8 bales is substantially square, when stacking one array on top of another, the stack tends to become unstable before reaching any substantial height. Thereby making it very difficult to achieve relieable and efficient operation of removing the bales from the field to a place of storage.

A more stable stack is achieved by rotating alternate arrays by 90° relative to the array on which they are to be placed, however this does not completely solve the problem since, instead of obtaining one composite stack, four separate "towers" of bales will be formed, each "tower" having two bales on each layer and, since bales tend not to be exactly uniformly formed, such a "tower" is not very stable after reaching the height of a few bales.

Such instability makes the transport of bales on a trailer almost impossible since, if the trailer goes over any bumps, one or more of the "towers" is likely to fall over causing considerable inconvenience. If the stack is formed in the field for picking up by an attachment on an agricultural tractor, the ground on which the stack is formed is quite often uneven which increases the chance of one or more of the "towers" of the stack toppling over before a stack of the desired height, usually 6, 7 or 8 bales, is achieved. Hence the stack is then incomplete not only do bales get missed out of the stack but it also hinders the proper operation of the attachment on the agricultural tractor from efficiently holding and carrying the stack of bales.

It is an object of the present invention to provide an apparatus for collating bales into an array of a configuration such that, when one array is stacked on top of another, a stable structure is produced.

According to one aspect of the invention, we provide a bale accumulator adapted for towing behind or alongside a baling machine, the bale accumulator having entry means adapted in use of the accumulator to receive bales from the baling machine and collating means adapted to form an array of eight bales, the configuration of the array comprising four bales juxtaposed in side-by-side relationship, the ends of said four bales defining two substantially parallel edges along each of which a pair of further bales are arranged, the bales of each pair being arranged in mutual end-to-end relationship.

Such an array will hereinafter be referred to as an array of the type described.

According to another aspect of the invention, we provide a bale accumulator for use with a baling machine and adapted to receive bales from the baling machine when in use, the accumulator having two outer channels, each adapted to receive two bales in end-to-end relationship and an intermediate channel adapted to receive four bales in side-by-side relationship, said accumulator having means for distributing successive bales to form the array and means for releasing the bales from the accumulator on or after completion of the array.

According to a further aspect of the present invention, we provide a bale accumulator adapted to form an array of the type described, said accumulator comprising a collating part adapted to receive bales from a baling machine and arrange a number of said bales, said number being less than the number forming said array, into a first sub-group, and on completion of said first sub-group, release them into a storing part of the accumulator, subsequent bales received by the collating part being so arranged to form a second sub-group, said second sub-group forming the complement of said array, said accumulator being adapted on completion of said second sub-group to release them into said storing part to complete said array, means being provided to release the completed array from the storing part.

The array of bales formed by the accumulator of the present invention ensures that, provided each successive array is rotated through 90$^\circ$ relative to the array on which it is to be placed "the only individual tower" of bales that is formed is in the middle of the stack, the boundary wall of the stack being formed by a well interwoven wall of bales. Thus, a very stable stack is achieved which may be built to a considerable height.

Preferably said first and second sub-groups each comprise equal numbers of bales. Each sub-group may comprise four bales, two outer bales, each extending with their length substantially parallel to the direction of travel of the bale accumulator, and two inner bales, arranged in mutual side-by-side relationship between the two outer bales with their length at right angles to the direction of travel of the accumulator.

Preferably the means for releasing each sub-group to the storing part comprises first gate means which conveniently is operable to release the bales automatically when the last bale in the respective sub-group takes up its collated position.

Preferably said array is held in the storing part by second gate means, said second gate means being provided with latch means which may be operated manually.

According to a still further aspect of the invention, we provide a bale accumulator adapted to collate bales into an array of the type described, the accumulator comprising a collating part and a storing part separated from each other by gate means, the collating part being adapted to form two sub-groups which together comprise said array, the collating part comprising three channels extending in a direction substantially parallel to the direction of travel of the accumulator during use, the three channels comprising two outer channels having a width transverse to the direction of travel slightly greater than the width of the bale but less then its length, the intermediate channel having a width slghtly greater than the length of the bale.

In use the bales enter the accumulator from a baling machine with their length aligned substantially parallel to the direction of travel of the accumulator and, in order to achieve the array of the type described, it is necessary for some of the bales to be rotated through 90° so that they have their length aligned substantially at right angles to the direction of travel of the accumulator.

In a three channel accumulator as described above, the bales that are rotated through 90° occupy the intermediate channel, partitions being provided between the intermediate channel and each outer channel so that the bales can take up their correct places.

The accumulator may be of any suitable design that produces an array of the type described and may be of the type whereby the bales are dragged along the ground to provide relative movement between the ground and the accumulator. Diverting means distributing the bales through the various channels being operated by the bales themselves, the diverting means may comprise diverter gates to direct the bales into their correct positions or alternatively may be powered by mechanical means or by hydraulic rams to move the bales to their required positions.

In a preferred form, the accumulator comprises a frame having an open bottom, means at its forward end for connecting the frame to the rear of a baling machine to be towed thereby, a mouth portion at the forward end of the frame to receive bales discharged from the baling machine, the longer axis of the bale being aligned substantially in the direction of travel of the frame, the frame having on each side to the rear of the mouth portion a channel of width substantially equal to the width of the bale and of length sufficient to accommodate at least one bale, and there being a central channel between the two side channels the width of which is substantially equal to the length of a bale and the length of which is sufficient to accommodate at least two bales in side-by-side relationship relative to the direction of travel.

In order to rotate some of the bales through a right angle i.e. those taking up a position intermediate channel, a reasonable amount of space is necessary in the collating part of the accumulator which could lead to the accumulator being of excessive size.

Such a problem may be overcome by providing that one of the partitions between the intermediate channel and one of the outer channels is movable by a bale entering and taking up a normal position in said outer channel to a normal partition position and is movable out of said normal partition position due to contact by a bale which is being rotated through a right angle to take up a position in the intermediate position. Such movement of the partition may be provided by pivotally mouting the partition at or adjacent its leading end, that being the end nearest the end of the accumulator into which the bales enter from the baling machine.

The bale accumulator may have means whereby a plurality of said arrays may be formed and stored in the storing part, one array on top of another, means may be provided to rotate through $90^{\circ}$, about a vertical axis, each array relative to the array immediately above or below or both.

When the accumulator comprises a storing part and a collating part the storing part may be collapsible or foldable relative to the collating part in order to minimise the space required for transport and storage purposes. Conveniently the storage part may be slidably mounted on the collating part such that in a stored position the storage part and the collating part are telescoped together and in an in use position they are extended relative to each other.

The invention will now be described in more detail by way of example only with reference to the accompanying drawings wherein:

FIGURE 1 is a schematic plan view of one embodiment of bale accumulator of the present invention;

FIGURE 2 is a perspective view of the deflector gates of the accumulator shown in Figure 1, the gates being shown in isolation;

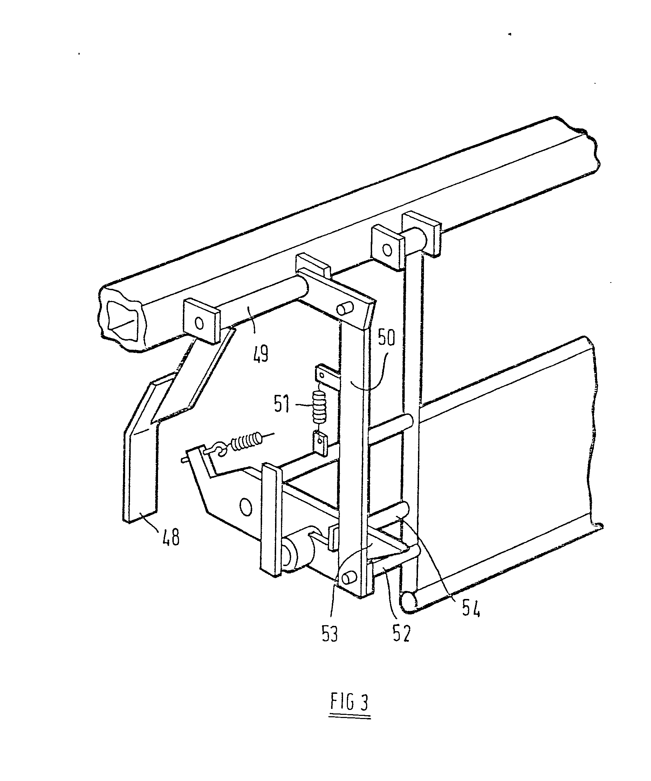

FIGURE 3 illustrates the collector part tail-gate latch assembly of the accumulator shown in Figure 1,

FIGURE 4 is a perspective view of a second embodiment of bale accumulator of the present invention;

FIGURE 5 is an enlarged view of the turning gate of the accumulator shown in Figure 4;

FIGURE 6 is a view showing a single array of bales;

FIGURE 7 is a view showing a stack of arrays as shown in Figure 6.

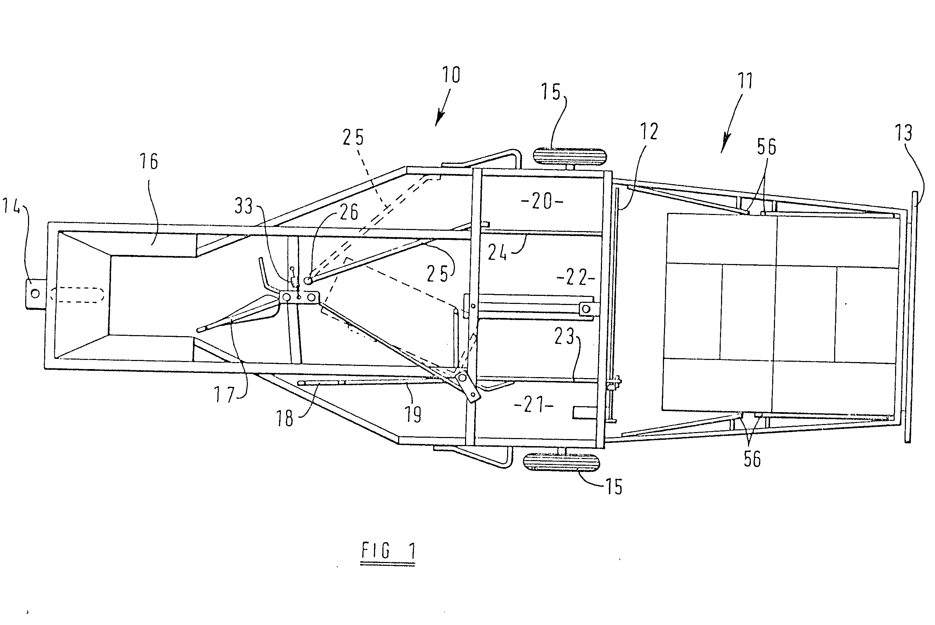

Referring first to Figure 1, the bale accumulator comprises a collating part 10 and a storing part 11, the two parts 10 and 11 being separated by a first tail gate 12, and the storing part 11 being closed by a manually operable tail gate 13.

The bale accumulator is provided with attachment means 14 by means of which it can be connected behind a baling machine and is supported above the ground by a pair of wheels 15. It is envisaged that the wheels 15 could if desired be replaced by ski-like runners which may be more suitable than wheels in some conditions.

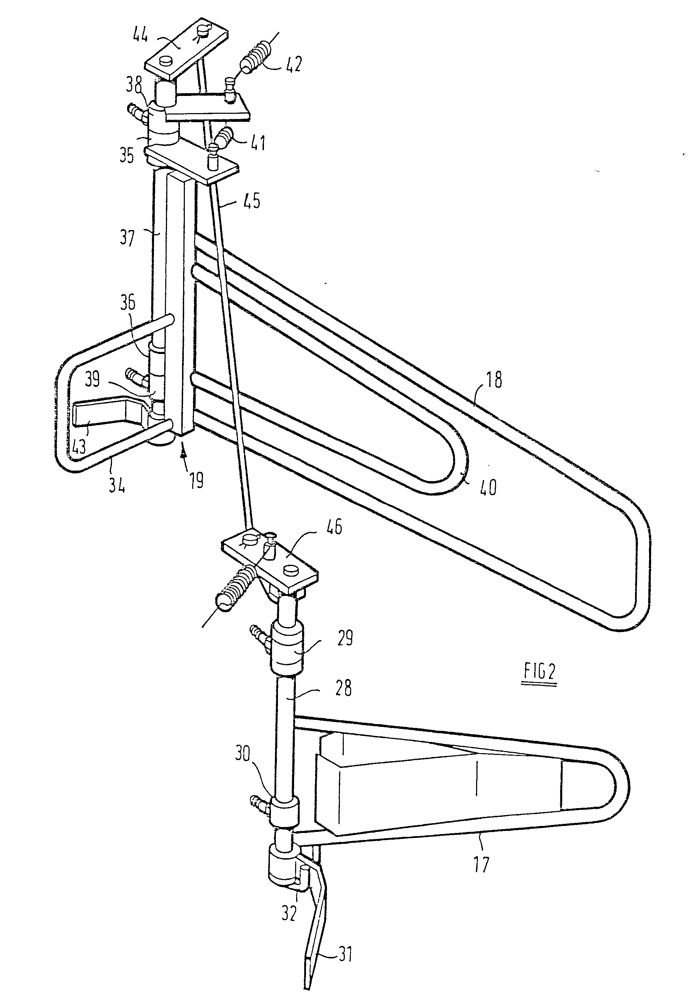

The collating part 10 of the accumulator has a mouth portion 16 into which the bales are received from the baling machine, a first deflector gate 17, (a second deflector gate 18 and a turning gate 19, the second deflector gate 18 and turning gate 19 can be better seen in Figure 2).

The collator part has three channels comprising outer channels 20 and 21 and an intermediate channel 22. A partition 23 divides channels 21 and 22, the partition dividing the channels 22 and 20 having two parts, a fixed part 24 and a movable part 25 which is mounted about a substantially vertical axis at its leading end 26 for pivotal movement between the extreme positions shown in bold outline and dotted outline.

The method of operation of the bale accumulator, in particular the manner of operation of deflector gates and turning gate, will now be described in detail.

Referring in particular to Figures 1 and 2, the first deflector gate 17 is mounted for limited pivotal movement about a substantially vertical axis such movement being enabled by the pivotal mounting of the upright part 28 in bushes 29 and 30 secured to the frame of the accumulator.

The upright part 28 also carries a trip member 31 which is mounted for movement relative to the upright part 28, such movement being limited by the spring 32. The arrangement is such that when the first bale enters the accumulator it is deflected by the gate 17 towards the channel 20 and as it passes it will strike the trip member 31 which, after a certain amount of lost motion between itself and the gate 17, will rotate the gate 17 about its pivotal axis until the leading edge of the gate abuts the other side of the bale accumulator from the side shown in Figure 1. The gate 17 will be maintained in this position by means of an over-centre spring 33 which biases the first deflector gate 17 into either of its extreme positions.

The movable part 25 of the partition between the channels 20 and 22 will not adversely affect the travel of the first bale into the channel 20 since, if it is for example in the position as shown in dotted outline, the bale will merely push it back to the position as shown in bold outline so the bale may take up its position abutting the tail gate 12 in the channel 20.

The second bale that enters the bale accumulator will be diverted towards the intermediate channel 22, the first deflector gate 17 will close the channel 20 and the second deflector gate 18 is biased into a position in which it closes the channel 21.

The second bale as aforementioned therefore is diverted towards the intermediate channel and during its travel its end will abut the short part 34 of the turning gate 19. The turning gate 19 is mounted for pivotal movement throughout a substantially vertical axis, the turning gate 19 being mounted on bushes 35 and 36 through which passes a rod 37 which is mounted for rotational movement abouts its longitudinal axis relative to bushes 38 and 39 which are secured to the accumulator frame.

When the end of the bale strikes the short part 34 of the turning gate 19, the turning gate will rotate in a clockwise manner, the long part 40 abutting the long side of the bale and thus the bale will be rotated through 90° and take up a position abutting the first tail gate 12. The turning gate is spring biased via springs 41 and 42 to return to the position shown in bold outline in Figure 1.

The passage of the second bale into its position will not have affected the position of the first deflector gate 17 and thus the next bale will also be directed into the intermediate channel, once again the turning gate 19 will rotate the bale through 90°. However, since the second bale is in position abutting the tail gate 12 when the third bale has been rotated through 90°, the third bale is only able to move a very small space towards the rear of the collating part of the bale accumulator and by abutting the short part 34 the turning gate 19 will maintain the turning gate in a position rotated through 90° compared with the position shown in Figure 1.

The affect of maintaining the turning gate in such a position stretches the spring 41 which in turn will rotate the rod 37 on which is carried the second deflector gate 18.

Since the turning gate 19 is unable to return to its original position because of the presence of the third bale, the second deflector gate 18 will be maintained in a position in which it closes the intermediate channel and opens the outer channel 21.

A second trip member 43 is connected through rod 37 to a bracket 44 which is in turn connected through rod 45 to a bracket 46. The bracket 46 is connected to the upright member 28 of the first gate 17, thus the second trip member 43 will now be in a position in which it projects across the channel 21.

As the last bale enters the channel 21 it will strike the second trip member 43 rotating bracket 44 in an anti-clockwise manner about the longitudinal axis of the rod 37; this in turn will cause anti-clockwise rotation of the bracket 46 which being connected to the upright member 28 the deflector gate 17 will return the first deflector gate 17 to its position shown in bold outline ready to start forming another sub-group of the array.

As the last bale takes up its position in channel 21, it will strike the tail gate trip 48 rotating rod 49 in an anti-clockwise manner about a substantially horizontal axis; this lifts connecting member 50 against the resilient bias of spring 51. The connecting member 50 has an extension part 52 which rests beneath a latch 53 so that when the connecting member 50 is raised, the extension part 52 will lift the catch 53 above its operative connection with the tail gate catch part 54. The operative connection between the catch 53 and the catch part 54 on the tail gate 12 comprises a slot in the catch 53 which engages around the tail gate catch part 54.

The four bales of the sub-group will thus be released due to the continuing forward motion of the accumulator and will take up a position at the rear of the storing frame 11. The second tail gate 13 is maintained in a closed position and has a manual trip means which allows the second tail gate 13 to be opened only when it is desired to do so.

The first tail gate 12 will close once the sub-group bales have passed and the bale accumulator will continue operating in a manner as aforedescribed. When a second sub-group of bales have been formed, the second sub-group forms the complement of the array of the type described and when released into the storing part 11 the array is complete.

The storing part 11 is shown to be of a tapered form and has deflector bars 56 on each side thereof to compact the array of bales.

When the array is complete, the manually operable tail gate 13 can be released by any suitable manner, for example by cables extending to within reach of the drive of a tractor pulling the baling machine, and the completed array may be released at any time after completion and before the next sub-group of bales will be released from the collating part 10 into the storing part 11. Thus, a considerable freedom of time is permitted to enable the completed arrays of bales to be deposited in a field in positions which enables efficient and speedy collection thereof.

As an alternative method of operating the first deflector gate 17 a pair of operating members may be provided in each of the outer chambers 20 and 21.

Each operating member is attached by attachment means to the first deflector gate 17 and when contacted by a bale will cause the deflector gate to move to its other position.

A second embodiment of bale accumulator according to the present invention will now be described the accumulator having a collating part which is capable of forming a complete array. The accumulator is illustrated without a storing part but it will be appreciated that a storing part could be secured to the rear thereof either permanently or detachably mounted which storing part may be supported only by the collating part of the bale accumulator or alternatively may be provided with wheels or other ground engaging means.

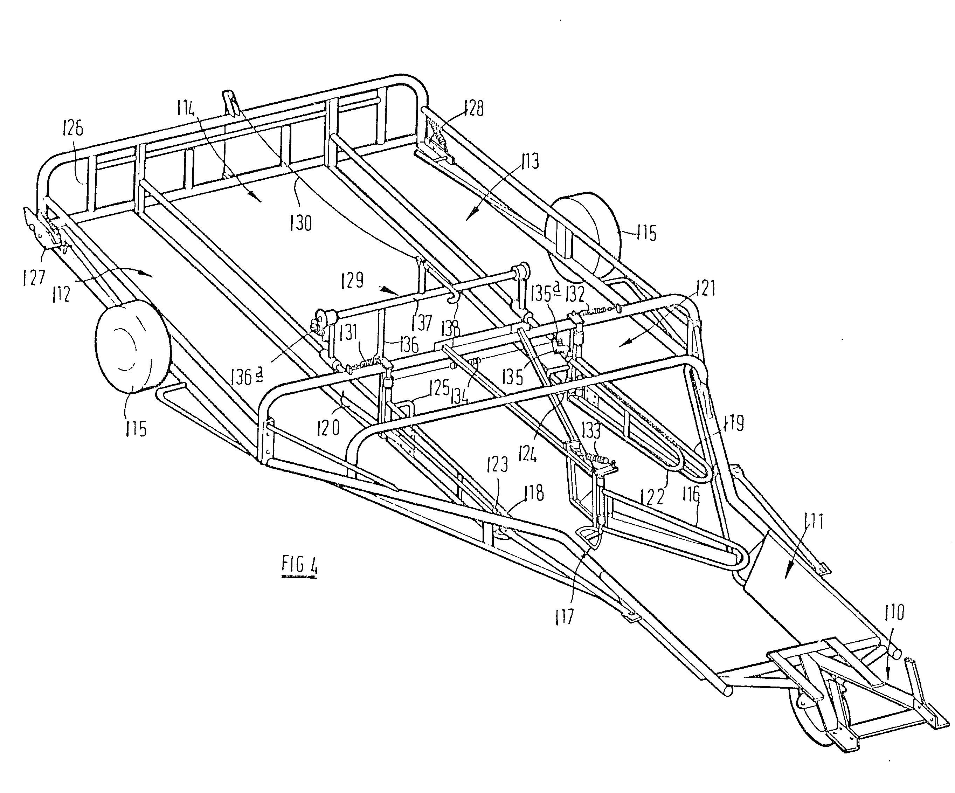

Referring to Figure 4, a bale accumulator is shown having means indicated at 110 for securing to the rear of a baling machine so that bales issue from the baling machine to a mouth portion 111 of the accumulator which comprises three channels, 112, 113 and 114, the channel 114 being approximately double the width of either of channels 112 and 113. The bale collator is provided with wheels 115 to enable it to be towed behind a baling machine.

A first diverter gate 116 is provided with an operating member 117, the operation of which will be described later. A pair of second diverter gates 118 and 119 are provided and are each mounted for limited pivotal movement about an approximately vertical axis. The gate 118 has a follower member 120 and the gate 119 also has a follower member which cannot be seen in the drawing but which is of the same construction as the follower member 120 and operates in the same way.

A pair of third turning gates 122 and 123 are provided wach also capable of pivotal movement about an approximately vertical axis, the gate 122 having an abutment part 124 and the gate 123 having a similar abutment part 125. The abutment parts 124 and 125 are pivoted about the same axis as their respective turning gates 122, 123 but can pivot independently of the gates, as described later. Finally, the bale accumulator has a tail gate 126 having catch elements 127 and 128, which maintain the tail gate in a closed position as shown, and release elements operated by an automatic tripping mechanism 129 via cable 130. The manner of operation of the bale collator will now be described in detail.

The second diverter gates 118, 119, together with the third turning gates 122 and 123, will, when the bale collator is empty of bales, be resiliently biased by springs 131 and 132 into a position where the front of the gates 122 and 123 abut against the position of pivotal mounting of the first gate 116 so that the channels 112 and 113 are open and the central channel 114 is closed. The parts are shown in different positions in Figure 4, the two outer channels 112 and 113 being closed in this case and the central channel being open.

Commencing with gate 116 in the position shown, the first bale that enters the opening 111 will therefore be diverted by gate 116 and gate 123 into the channel 112 and since the bales have a length approximately twice that of the width and the bale issues from the baler end first and the width of the channel 112 only permits entry of the bale end-on, the bale will take up a position longitudinally in line with fore and aft axes of the bale accumulator and abutting the tail gate 126. Since there is no bottom on the bale collator, the bales are dragged along the ground and as the bale collator itself is being towed behind a baling machine, the relative movement causes the bales to take up a position at the rearmost part of the machine.

During the course of travel, the bale will have hit the operating member 117 connected to the first gate 116. The operating member 117 is mounted for movement about a vertical axis and is biased by spring 133 to either one of two positions, the first of the positions being as shown in the drawing.

As the bale comes into contact with the operating member 117, the member 117 will be rotated in a clockwise manner (as viewed from above in Figure 4) until it has gone through approximately $90^{\circ}$ whereupon the spring 133 will be stretched to its maximum stretched position, the arrangement then passing through an over-centre position and the spring 133 will then urge the operating member 117 to the second of its two positions in which it is rotated through approximately $180^{\circ}$ from the position shown.

The operative connection between the operating member 117 and the first diverter gate 116 incorporates a "lost motion" feature such that the gate 116 is not moved until the operating member 117 has gone through a certain angle (about 60° for example), whereupon the connection between the operating member 117 and the gate 116 is made and the gate 116 will be moved in a clockwise manner about its pivotal axis to take up a position in which its front end abuts the other side of the bale collator.

The path of travel of the first bale will also cause it to come into contact with the follower member 120 which when the gate 118 is in the position as above described, (but not as shown), will project outwardly into the channel 112. Contact between the bale and the follower member 120 will cause the gate 118 to take up a position very much as shown in Figure 4. After the follower member 120 has moved out of contact with the first bale, the action of spring 131 will cause the gate 118 to move back to its initial position.

The first gate 116 is now in its other position (opposite to that shown in Figure 4) and the gate 119 is in a similar position to the gate 118, that is with its front end adjacent to the pivotal mounting of the gate 116. Thus, the second bale coming from the baling machine will be deflected in an identical manner as the first bale so as to arrive at the rear end of the channel 113. Once again the operating member 117 will be contacted by this bale and the first gate 116 will be moved back to the position shown in Figure 4. After the second bale has passed its follower member, the gate 119 will return to the position shown in Figure 4 under the influence of spring 132.

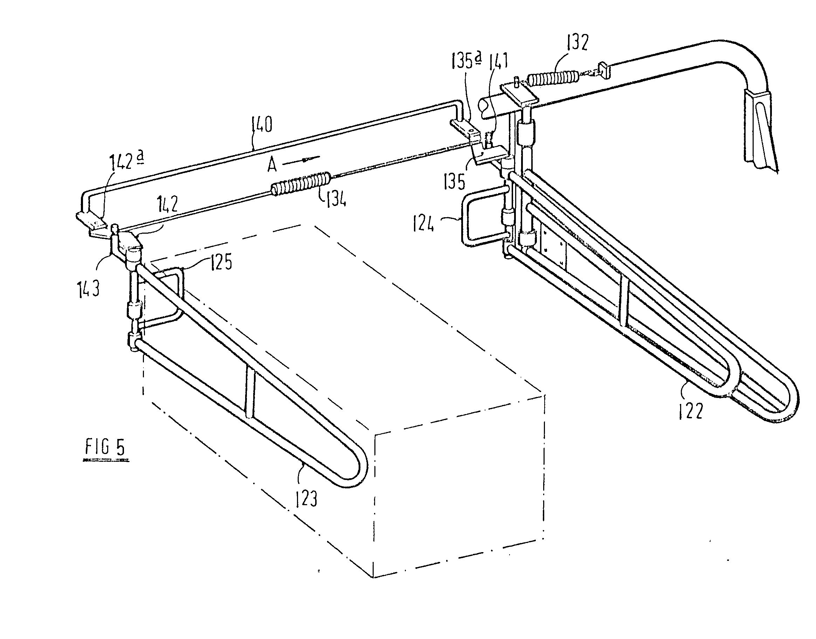

The third bale will be delfected into the channel 112 which is already occupied by the first bale. Thus, during its movement into position, it comes into contact with the follower member 120 of gate 118 and will remain in contact with the follower member 120 since the presence of the first bale prevents it proceeding any further down the channel 112. The second gate 118 is this now maintained in the position as shown in the drawing. The turning gate 123 will follow the movement of the second gate 118 into the position shown in Figure 4 because it is biased by the spring 134 which is connected between the two turning gates (see Figure 5).

Movement of the third bale into position in the channel 112 will once again have moved into its other extreme position. The fourth bale will be deflected into the channel 113 which is also occupied by a bale and, in a manner exactly similar to the third bale, will maintain the second gate 119 in the position shown in the drawing, the two channels 112 and 113 now being full of bales. The turning gate 122 will follow te movement of the second gate 119 by biasing means provided by the spring 134.

The first gate 116 will now be in the position shown in the drawing and the central channel 114 is open. The fifth bale that enters the sledge will arrive in the opening 111 and be deflected by the first gate 116 and then engage the turning gate 123 so that this fifth bale is in a position where the leading corner of the bale abuts the abutment part 125 (see Figure 5). This immediately causes pivotal movement of the gate 123 and the abutment part 125 so that they move together about a substantially vertical pivotal axis provided by the mounting, through approximately $90^{\circ}$ turning the bale through $90^{\circ}$.

It will be apparent that the abutment part 124 could prevent complete turning of the bale by the gate 123 and abutment part 125 by projecting into the channel 113. However, the abutment part 124 is connected to the abutment part 125 and gate 123 by connection means, part of which is shown at 135, 135a and includes a cross member 140 (see Figure 2) which connects it to parts similar to parts 135 and 135a on abutment part 125. the connection (which is described in detail later) being such that as soon as any anti-clockwise movement of the gate 123 and abutment part 125 occurs, the abutment part 124 is also pivoted about its vertical axis in an anti-clockwise manner, thus allowing a complete 90° turn of the bale.

Thus the bale is turned through 90° and takes up a position at the end of channel 114 lying at right angles to the bales in the channels 112 and 113.

The turning gate 123 and abutment part 125 are returned to the position as shown by spring 134. Likewise, the abutment part 124 returns with them also under the spring bias to the position shown.

Referring to Figure 5, it can be seen that any clockwise rotation of abutment part 124 will immediately cause contact between the part 135 and an upstanding peg-like part 141 of the turning gate 122, thus rotating the turning gate 122 with the abutment part 124. Such rotation will cause movement of the cross connecting member 140 in the direction shown by arrow A. This will cause clockwise rotation of part 142 and thus clockwise rotation of abutment part 125 in order to cause the abutment part 125 to take up a position adjacent the turning gate 123. Such movement allows free passage of a bale turned by turning gate 122 and abutment part 124 into the channel 114. Furthermore, such movement of the abutment part 125 does not cause any rotation of turning gate 123 since the part 142 is rotated clockwise out of contact with the peg-like extension 143 of turning gate 123.

As the fifth bale entered the channel 114, the operating member 117 of the first gate 116 was rotated and the gate 116 is now in the other of the two positions.

The sixth bale that enters the bale accumulator will be diverted by first gate 116 to engage turning gate 122 until it comes into contact with the abutment part 124, which abutment part 124 and turning gate 122 will operate in a similar fashion to gate 123 and abutment part 125, and rotate the bale through a right angle. Such movement causes pivotal movement of the abutment part 125 in a clockwise direction to take up a position substantially planar with the turning gate 123 to enable the bale, now having been turned through a right angle, to take up its position at right angles to the bales in channels 112 and 113 and in abutment with the fifth bale which is at the far end of the channel 114.

Movement of the fifth and sixth bales into the channel 114 will have caused contact between the downwardly depending member 136 provided on the tail gate trip means 129. Such contact will have caused rotation of rod 137 and will have had the effect of tensioning the cable 130 but not sufficient to operate the trip. As soon as the bale has moved out of contact with the downwardly depending member 136 it will return to the position as shown, under the bias of spring 136a, with plenty of slack in the cable 130 and exactly the same will have happened with the sixth bale, i.e. the second to enter channel 114.

The seventh bale will enter the opening 111 and be diverted by gate 116 on to abutment 125, be turned by the abutment part 125 and turning gate 123 through a right angle and take up position in channel 114. This seventh bale will come into contact with downwardly depending member 136 and will not move out of contact therewith in view of the presence of the fifth and sixth bales already in position in channel 114 and thus all the slack of the cable 130 will be taken up, the rod 137 having been rotated through virtually a right angle. Such rotation will bring a second member 138 into a position in which it will be downwardly depending from the rod 137 and in position to be contacted by any bale entering the channel 114.

The eight bale then enters the opening 111 and is deflected by the first gate 116 and comes into contact with abutment part 124 of turning gate 122 and is turned in a manner as aforedescribed through a right angle, the abutment part 125 having been moved out of the path of the bale in the manner previously described.

As aforementioned, the part 138 is now projecting into the path of the eight bale and when contacted by the bale will tend to cause further rotation of the rod 137 in a clockwise direction. The slack has already been taken out of the cable 130 and thus further rotation of the rod 137 causes the cable 130 to be pulled which releases the catch members 127 and 128 thus opening the tail gate 126.

It must be remembered that the bale collator is being towed behind a baling machine during operation thereof and so the bales will be left on the ground and the bale collator pulled away from them leaving an array of eight bales. The first gate 116 will be left in the position as shown in the drawings, the second gates 118 and 119 will be in a position with their front end adjacent the vertical pivotal mounting of the first gate 116, the turning gates 122 and 123 lying in a position adjacent the second gates 119 and 118 respectively and the bale accumulator is once again ready for collating another eight bale array.

It will be appreciated that the bale accumulator shown in the accompanying drawings may have turning gates that are incorporated in the second gates for example by providing abutment parts 124 and 125 on gates 119 and 118, the exact shape and configuration of which may be altered in order for them to act satisfactorily as both diverter gates and turning gates.

As a still further alternative, the second diverter gates 118 and 119 may be left substantially as they are and fixed abutments may be provided so positioned that they contact incoming bales after channels 112 and 113 are full, the bales necessarily turn through a right angle to take up a position in the central channel 114 aligned at right angles to the bales in channels 112 and 113.

As a still further alternative, the bale accumulator could be of completely different design and have a flat bed having pusher members which may be operated by hydraulic rams for example, the bales being forced to take up their required positions on the bed by said pusher members and, if need be, other guide members.

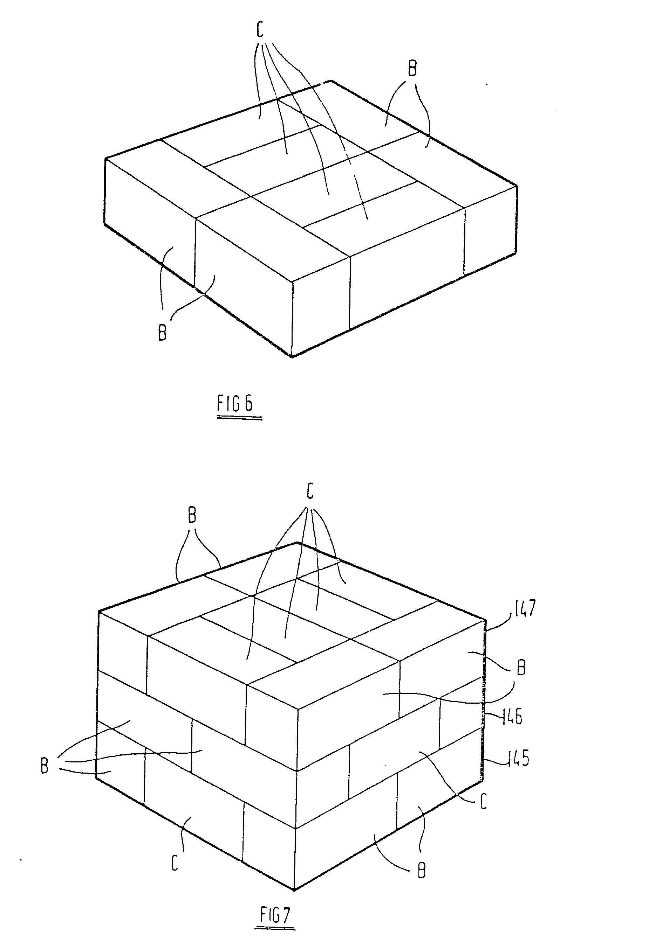

Figure 6 is an illustration of an array of bales formed by the collator shown in Figure 4, the bales marked B are the bales directed to the outer channel and the bales marked C are the bales directed to the central channel.

The importance of the array as shown in Figure 4 becomes apparent when it is required to stack one array of bales on top of another.

There are many proprietory machines, for attaching to lifting forks provided on the front of tractors for example, by means of which the array of eight bales can be picked up together and piled on top of another eight bales. A stack is usually made about seven bales high and the whole stack then picked up by a machine having a pair of side members, movable together by a hydraulic ram for example, to grip the sides of the stack which is then transported to the barn or the like.

As aforementioned, considerable trouble has occurred in the past with stacks of bales falling over. The reason for this is that the bales have been collated in four channels having two bales in each channel in end-to-end relationship and, when stackedm even though successive arrays wil be rotated through 90°, relative to the array immediately below, the resulting stack will form four "towers" of bales, each "tower" only comprising two bales at each level and when the stack gets to a height of four or five bales, they often fall over, thereby making mechanised recovery of bales a difficult and time consuming process.

Referring now to Figure 8, a stack of three bales high is shown, comprising three arrays 145, 146 and 147 in which successive arrays are arranged at right angles to each other. It will be noted that the interlocking of bales around the outside of the stack is complete and no separate towers are formed. A separate tower of bales comprising only two bales on each layer is formed in the centre of the stack. However, since this central tower is surrounded by an interlocked wall of bales, the problem of bales falling off the stack due to instability is greatly reduced, if not completely overcome, thereby enabling more efficient mechanised baling, collating and transporting of bales of hay, straw or the like from the field to a desired place of storage.

CLAIMS:

1. A bale accumulator adapted for towing behind or alongside a baling machine, the bale accumulator having entry means (16) adapted in use of the accumulator to receive bales from the baling machine and collating means adapted to form an array of eight bales, characterised in that the configuration of the array comprises four bales (C) juxtaposed in side-by-side relationship, the ends of said four bales (C) defining two substantially parallel edges along each of which a pair (B) of further bales are arranged, the bales of each pair being arranged in mutual end-to-end relationship.

2. A bale accumulator as claimed in Claim 1 characterised in that the accumulator comprises two outer channels (20, 21) each outer channel having a width substantially equal to the width of a bale, and a central channel (22) between the two outer channels of widths substantially equal to the length of a bale.

3. A bale accumulator as claimed in Claim 1 or Claim 2 characterised in that the accumulator comprises a frame having an open bottom, connecting means (14) at its forward end for connecting the frame to the rear of a baling machine to be towed thereby, a mouth portion (16) at the forward end of the frame to receive the bales discharged from the baling machine, means (17, 18 and 19) for distributing successive bales to form the array and means (13) for releasing the bales from the accumulator when the array is complete.

4. A bale accumulator as claimed in Claim 3 characterised in that the means for distributing successive bales to form the array comprises diverter gates (71, 18 and 19) each mounted for pivotal movement and operative by the bales on the occurrence of relative movement between the bale accumulator and the bales.

5. A bale accumulator as claimed in any one of the preceding claims characterised in that the accumulator comprises a collating part (10) adapted to receive bales from a baling machine and arrange a number of said bales, said number being less than the number forming said array into a first sub-group, and on completion of first sub-group release them into a storing part (11) of the accumulator, subsequent bales received by the collating part (10) being so arranged to form a second sub-group, said second sub-group forming the complement of said array, said accumulator being adapted on completion of said second sub-group to release them into said storing part (11) to complete said array, means being provided to release the completed array from the storing part.

6. A bale accumulator as claimed in Claim 5 characterised in that the means for releasing each completed sub-group to the storing part (11) comprises first gate means (12) operative to release the sub-group into the storing part (11) when the last bale in said sub-group takes up its collated position.

7. A bale accumulator as claimed in Claim 2 or any claim appendant thereto characterised in that means (19) are provided for rotating bales through 90° from the position in which their length is aligned to the direction of travel of the accumulator as they enter the bale accumulator to a collated position in the central channel in which their length is aligned transverse to the direction of travel of the accumulator.

8. A bale accumulator as claimed in Claim 7 characterised in that said means comprises a turning gate (19) having an abutment part (34) adapted to be contacted by the end of the bale and a follower part (40) adapted to engage the side of the bale, the abutment part (34) and follower part (40) being mounted for pivotal movement about a common axis.

9. A bale as claimed in Claim 2 or any Claim appendant thereto characterised in that a movable partition (25) is provided between one of said outer channels and said central channel, said movable partition having a normal position in which it permits a bale to take up a collated position in said outer channel and another position in which it permits of turning of bales through $90^{\circ}$ required to take up a collated position in the central channel.

10. A bale accumulator as claimed in any one of Claims 1 to 3 characterised in that at the rear of a mouth portion (111) the first diverter gate (16) is pivoted about a vertical axis and operative to deflect bales successively to one side and then to the other of the central longitudinal axis of the accumulator, a pair of second diverter gates (18, 19), one disposed at the forward end of each outer channel (12, 13) being pivoted about a vertical axis for movement between one extreme position in which it closes off the forward end of its associated outer channel and another extreme position in which it deflects a bale into its associated outer channel, said two second diverter gates, when each is in said other of its extreme positions, serving to close off the forward end of the central channel, and abutment means (24, 25) associated with the central channel to engage a bale entering the central channel lengthwise and cause the bale to turn through $90^{\circ}$.

11. A bale accumulator as claimed in Claim 5 or Claim 6 characterised in that said storage part (11) is slidably mounted on said collating part (10) and is movable from a folded position in which it is telescoped into a collating part (10) to an in use extended position relative to the collating part (10).

0058265

1/6

FIG 1

FIG 2

0058265

2/6

FIG 3

FIG 4

126  114  128  113  115  130  129  135ª  132  121  112  127  131  137  136  136ª  120  125  134  135  123  124  133  119  118  117  122  116  111  110  115

4/6

0058265

0058265

FIG 5

FIG 6

FIG 7

0058265
Application number

EP 81 30 0630

## European Patent Office

## EUROPEAN SEARCH REPORT

| | DOCUMENTS CONSIDERED TO BE RELEVANT | | CLASSIFICATION OF THE APPLICATION (Int Cl ³) |
|---|---|---|---|
| Category | Citation of document with indication, where appropriate, of relevant passages | Relevant to claim | |
| | US - A - 3 942 651 (NEELY)  * Column 3, lines 57-68; column 4, lines 1-63; column 5, lines 30-68; figures 1,2,3 * | 1,5,7 | A 01 D 85/00 |
| | US - A - 3 687 302 (CASTRO)  * Column 5, lines 38-68; column 6, lines 1-68; column 7, lines 1-15; figures 8B, 9 * | 1,5,6, 7 | |
| | GB - A - 1 566 859 (PARSONS)  * Page 3, lines 55-130; page 4, page 5, lines 1-75; figures 1,2 * | 2-6, 10,11 | **TECHNICAL FIELDS SEARCHED (Int Cl ³)**<br><br>A 01 D |
| | US - A - 3 949 886 (HARBER)  * Column 3, lines 3-68; column 4, lines 1-68; column 5; column 6; column 7, lines 1-47; figures 1,2,2A * | 3-8 | |
| | DE - A - 2 730 636 (BOLLMANN)  * Page 4, last paragraph; page 5; page 6, figures 2,3 * | 2,7,8 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-10-1981 | VERMANDER |

EPO Form 1503.1   06.78